# EUROPÄISCHE PATENTSCHRIFT

(11) **EP 0 683 399 B1**
(45) Veröffentlichungstag und Bekanntmachung des Hinweises auf die Patenterteilung: **14.11.2001**
(21) Anmeldenummer: 95107011.9
(22) Anmeldetag: 09.05.1995
(51) Int. Cl.: G01S 3/14

(54) **Antenneanordnung zur Raumwellenpeilung**
Antenna for sky-wave direction finder
Antenne de radiogoniomètre de l'espace

(30) Priorität: 19.05.1994 DE 4417630
(43) Veröffentlichungstag der Anmeldung: 22.11.1995
(73) Patentinhaber: EADS Deutschland GmbH, 81663 München (DE)
(72) Erfinder: Bodemann, Gerhard, Dipl.-Ing., D-89075 Ulm (DE)
(74) Vertreter: Straub, Bernd

(56) Entgegenhaltungen:
- EP-A- 0 206 359
- DE-A- 3 641 626
- US-A- 3 742 505
- US-A- 4 207 572
- US-A- 5 032 844

## Beschreibung

Die Erfindung betrifft eine Antennenanordnung zur Raumwellenpeilung gemäß Oberbegriff des Patentanspruchs 1.

Aus dem US-Patent US 4,207,572 ist eine Antennenanordnung nach dem Oberbegriff des Patentanspruchs 1 bekannt. Die Rahmenantennen sind dabei in vertikalen Ebenen angeordnet.

Die Raumwellenpeilung kann zu Ortungszwecken eingesetzt werden. Dabei macht man sich die Erkenntnis zunutze, daß von einem zu ortenden Sender ausgestrahlte HF-Strahlung an der Ionosphäre zum Teil reflektiert und auf die Erdoberfläche zurückgestrahlt wird. Kennt man nun die Höhe der reflektierenden Schicht, kann man durch Peilung der reflektierten HF-Strahlung, d.h. durch Messung des Azimut- und Elevationswinkels der einfallenden (reflektierten) HF-Strahlung, mit Hilfe einfacher trigonometrischer Berechnungen den Ort des Senders bestimmen. Das entsprechende Ortungsverfahren ist unter dem englischsprachigen Fachbegriff "Single-Station-Location" oder abgekürzt "SSL" allgemein bekannt.

Es wurde bereits eine Antennenanordnung zur Raumwellenpeilung vorgeschlagen, die aus einer an einem Mast angeordneten Kreisgruppe mit acht vertikal polarisierten Rahmenantennen besteht.

Eine solche Antennenanordnung ist für die Raumwellenpeilung insbesondere mit auf Schiffen angeordneten Peilanordnungen nur bedingt tauglich, und zwar aus folgenden Gründen :

Da die Richtcharakteristiken der einzelnen Rahmenantennen unterschiedliche Richtungen haben, ist eine Raumpeilung nach dem allgemein bekannten Adcock/Watson-Watt-Peilverfahren von vornherein ausgeschlossen, da bei diesem Peilverfahren Rahmenantennen mit gleicher Ausrichtung der Strahlungsdiagramme erforderlich sind.

Aber auch, wenn man die vertikal polarisierten Rahmenantennen so ausrichtet, daß ihre Richtcharakteristiken alle in die gleiche Richtung weisen, ist eine Raumpeilung nach dem Adcock/Watson-Watt-Peilverfahren nicht möglich, da mindestens zwei dieser Rahmenantennen mit dem Mast verkoppelt sind.

Eine Raumwellenpeilung mit einer Kreisgruppe mit vertikal polarisierten Rahmenantennen ist von daher im Prinzip nur dann möglich, wenn die Peilanordnung nach dem Interferometer-Peilverfahren arbeitet. Insbesondere bei auf Schiffen angeordneten Peilanordnungen macht sich bei diesem Lösungsvorschlag jedoch nachteilig bemerkbar, daß die von den Schiffsaufbauten herrührende Störstrahlung, die hauptsächlich durch Reflexion der einfallenden Raumwelle hervorgerufen wird, bei der Detektion der Raumwelle nicht unterdrückt wird, da das Strahlungsdiagramm der einzelnen Rahmenantennen unterhalb und oberhalb der entsprechenden Antenne von Null verschieden ist, so daß nicht nur die von oben einfallende Raumwelle, sondern auch die von unten einfallende Rückstrahlung der an den Schiffsaufbauten reflektierten Raumwelle von den Rahmenantennen detektiert wird. Darüber hinaus macht sich bei dieser Lösung die unterschiedliche Polarisationsempfindlichkeit der einzelnen Rahmenantennen bezüglich der zirkular oder elliptisch polarisierten Raumwelle negativ bemerkbar.

Es wurde auch schon eine Interferometer-Peilanordnung für Schiffe vorgeschlagen mit auf dem Schiffsdeck verteilt angeordneten, vertikal polarisierten Rahmenantennen. Bei dieser Antennenanordnung wird jedoch nicht nur die unerwünschte Störstrahlung infolge der Rückstreuung an Schiffsaufbauten detektiert, sondern auch die infolge der Rückstreuung an dem Mast.

Die Aufgabe der Erfindung besteht darin, eine Antennenanordnung zur Raumwellenpeilung anzugeben, bei der der Rückstrahlungsanteil im Empfangssignal möglichst niedrig ist und die insbesondere für Schiffspeilanordnungen geeignet ist.

Die erfindungsgemäße Lösung der Aufgabe ist durch die kennzeichnenden Merkmale des Patentanspruchs 1 wiedergegeben. Die übrigen Ansprüche enthalten vorteilhafte Aus- und Weiterbildungen der Erfindung (Ansprüche 2 bis 9) sowie eine bevorzugte Anwendung der Erfindung (Anspruch 10).

Ein erster Vorteil der Erfindung besteht darin, daß die Antennen vom störenden Rückstrahlfeld des Mastes völlig entkoppelt sind. Ein weiterer Vorteil ist darin zu sehen, daß auch die von unten einfallende Rückstrahlung, z.B. infolge von Reflexionen der Raumwelle an unterhalb der Antennenanordnung angeordneten Objekten weitgehend ausgeblendet wird, da die Strahlungsdiagramme der einzelnen (horizontal polarisierten) Antennen gerade unterhalb (und oberhalb) der entsprechenden Antenne Null sind. Insofern eignet sich die erfindungsgemäße Antennenanordnung vor allem für den Einsatz in Peilanordnungen, die auf Schiffen angeordnet sind, weil hier die vom Mast und den Schiffsaufbauten verursachten Reflexionen, die den wesentlichen Teil der normalerweise auftretenden Rückstrahlung auf Schiffen ausmacht, weitgehend ausgeblendet wird.

Ein dritter Vorteil besteht darin, daß mit der erfindungsgemäßen Antennenanordnung Peilanordnungen sowohl nach dem Interferometer- als auch nach dem Adcock/Watson-Watt-Peilverfahren betrieben werden können. Letzteres deshalb, weil bezüglich der einfallenden Raumwelle und deren Polarisation die Richtdiagramme der einzelnen Rahmenantennen alle gleich ausgerichtet sind und deshalb die Antennen alle dieselben Detektionseigenschaften aufweisen.

Ein vierter Vorteil ist darin zu sehen, daß die erfindungsgemäße Antennenanordnung sehr kompakt aufgebaut werden kann und daß infolge der sehr effektiven Rückstrahlungsunterdrückung durch.die Antennen selbst die nachfolgende Signalverarbeitung entsprechend einfacher gestaltet werden kann.

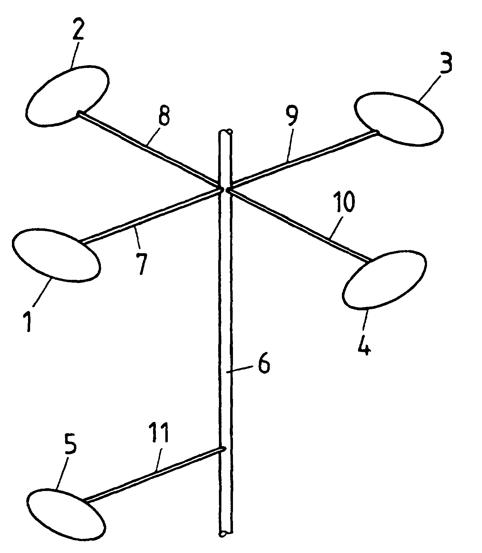

Im folgenden wird die Erfindung anhand der Figur näher erläutert, die ein bevorzugtes Ausführungsbeispiel der erfindungsgemäßen Antennenanordnung zeigt.

Gezeigt ist eine Kreisgruppe von (beispielhaft) vier in den Ecken eines (gedachten) horizontal ausgerichteten Quadrats angeordneten kreisförmigen Rahmenantennen 1 bis 4, die in der Ebene des Quadrats angeordnet sind und somit für horizontal polarisierte Wellen besonders empfindlich sind und über Verbindungsstäbe 7 bis 10 an einem Mast 6 angeordnet sind. Unterhalb der Kreisgruppe 1 bis 4 ist ferner eine baugleiche fünfte kreisförmige Rahmenantenne 5 angeordnet, die ebenfalls in einer horizontalen Ebene liegt und somit für horizontal polarisierte Wellen besonders empfindlich ist und über einen weiteren Verbindungsstab 11 an dem Mast 6 befestigt ist. Der (nur zum Teil) gezeigte Mast 6 kann z.B. auf einem (nicht gezeigten) Schwimmkörper, z.B. einem Schiff, oder auf dem Land angeordnet sein.

Die Antennenanordnung kann zur Peilung der Raumwelle (Azimut und Elevation) sowohl nach dem an sich bekannten Interferometer-Peilverfahren als auch nach dem ebenfalls an sich bekannten Adcock/Watson-Watt-Peilverfahren konfiguriert und betrieben werden.

Für den Fall, daß die Peilgenauigkeit der Kreisgruppe 1 bis 4 bezüglich des Elevationswinkels nicht ausreicht, weil beispielsweise die Basis der nach dem Interferometer Peilverfahren konfigurierten und betriebenen Kreisgruppe 1 bis 4 zu klein ist, ist die zusätzliche Rahmenantenne 5 vorgesehen, die zusammen mit einer oder mit allen Rahmenantennen 1 bis 4 der Kreisgruppe nach dem Interferometer-Peilverfahren konfiguriert und betrieben werden kann und deren Abstand entsprechend der Wellenlänge der zu peilenden Raumwelle so gewählt werden kann, daß die Basis des so konfigurierten Interferometers ausreichend groß ist, um den Elevationswinkel mit der gewünschten Peilgenauigkeit bestimmen zu können.

Es versteht sich, daß die Erfindung nicht auf das dargestellte Ausführungsbeispiel beschränkt ist, sondern auf weitere übertragbar ist.

So ist die Zahl der Rahmenantennen der Kreisgruppe keineswegs auf vier beschränkt, sondern kann auch mehr als vier Antennen umfassen (als Interferometer können es aber auch weniger als vier, nämlich drei Antennen sein).

Ferner müssen die Rahmenantennen nicht kreisförmig ausgebildet sein, sondern können auch andere Formen, wie z.B. Rechtecke, Rauten oder Quadrate, annehmen. Denkbar ist auch, daß die Antennen der Kreisgruppe bzw. die zusätzlichen Antennen unterschiedliche Formen haben, beispielsweise derart, daß jede Antenne der Kreisgruppe eine andere Form hat.

Auch muß die zusätzliche Rahmenantenne nicht baugleich sein mit den Antennen der Kreisgruppe. Schließlich ist es nicht erforderlich, daß die zusätzliche Rahmenantenne in einem bestimmten Abstand direkt unterhalb oder direkt oberhalb einer der Rahmenantennen der Kreisgruppe angeordnet ist, sie kann auch in einem bestimmten Abstand unterhalb oder oberhalb, aber zwischen zwei Rahmenantennen der Kreisgruppen, angeordnet werden. Denkbar ist auch, daß mehr als eine zusätzliche Rahmenantenne unterhalb und/oder oberhalb der Kreisgruppe am Mast angeordnet werden, so daß das so konfigurierte Interferometer mehrere Basen hat, die in der Länge und/oder Ausrichtung unterschiedlich sind.

Denkbar ist auch, daß die zusätzlichen Antennen in ihrem Abstand von der Kreisgruppe und/oder dem Mast und/oder in ihrer Ausrichtung variabel einstellbar sind.

## Patentansprüche

1. Antennenanordnung zur Raumwellenpeilung, bestehend aus einer an einem Mast angeordneten Kreisgruppe mit mehreren polarisierten Rahmenantennen, **dadurch gekennzeichnet, daß** die Rahmenantennen (1 bis 4)in einer horizontalen Ebene liegend angeordnet sind.

2. Antennenanordnung nach Anspruch 1, **dadurch gekennzeichnet, daß** die Kreisgruppe vier Rahmenantennen (1 bis 4) umfaßt.

3. Antennenanordnung nach Anspruch 2, **dadurch gekennzeichnet, daß** die vier Rahmenantennen (1 bis 4) in den Ecken eines in der horizontalen Ebene liegenden Quadrats angeordnet sind.

4. Antennenanordnung nach einem der vorhergehenden Ansprüche, **dadurch gekennzeichnet, daß** die Rahmenantennen (1 bis 4) kreis- oder rechteck- oder rautenförmig oder quadratisch ausgebildet sind.

5. Antennenanordnung nach einem der Ansprüche 1 bis 4, **dadurch gekennzeichnet, daß** die Kreisgruppe (1 bis 4) Teil einer nach dem Watson-Watt-Peilverfahren arbeitenden Adcock-Peilanordnung ist.

6. Antennenanordnung nach einem der Ansprüche 1 bis 4, **dadurch gekennzeichnet, daß** die Kreisgruppe (1 bis 4) Teil einer nach dem Interferometer-Peilverfahren arbeitenden Peilanordnung ist.

7. Antennenanordnung nach einem der vorhergehenden Ansprüche, **dadurch gekennzeichnet, daß** mindestens eine zusätzliche, in einer horizontalen Ebene liegenden Rahmenantenne (5) in vorgegebenem Abstand ober- und/oder unterhalb der Kreisgruppe (1 bis 4) am Mast (6) angeordnet ist.

8. Antennenanordnung nach Anspruch 7, **dadurch gekennzeichnet, daß** die mindestens eine zusätzliche Rahmenantenne (5) baugleich ist mit den Rahmenantennen der Kreisgruppe (1 bis 4) und vorzugsweise in einem vorgegebenen Abstand direkt ober- und/oder unterhalb einer (1) der Rahmenantennen der Kreisgruppe (1 bis 4) am Mast (6) angeordnet ist.

9. Antennenanordnung nach einem der Ansprüche 7 oder 8, **dadurch gekennzeichnet, daß** die mindestens eine zusätzliche Rahmenantenne (5) in ihrem Abstand von der Kreisgruppe (1 bis 4) und/oder dem Mast (6) und/oder ihrer Ausrichtung variabel einstellbar ist.

10. Antennenanordnung nach einem der vorhergehenden Ansprüche, **gekennzeichnet durch** die Verwendung in einer auf einem Schwimmkörper, insbesondere auf einem Schiff, angeordneten Peilanordnung.

## Claims

1. An antenna array for a space wave direction-finding system consisting of a circular array on a mast with several polarized loop antennas, **characterized in that** the loop antennas (1-4) are arranged in a horizontal plane.

2. An antenna array according to claim 1, **characterized in that** the circular array comprises four loop antennas (1-4).

3. An antenna array according to claim 2, **characterized in that** the four loop antennas (1-4) are arranged in the corners of a square lying in the horizontal plane.

4. An antenna array according to one of the prior claims, **characterized in that** the loop antennas (1-4) are circular, rectangular, diamond-shaped or square.

5. An antenna array according to one of claims 1 to 4, **characterized in that** the circular array (1-4) is a part of an Adcock direction finder that operates according to the Watson-Watt direction-finding procedure.

6. An antenna array according to one of claims 1-4, **characterized in that** the circular array (1-4) is part of direction-finding procedure that functions according to the interferometer direction-finding procedure.

7. An antenna array according to one of the prior claims, **characterized that** at least one additional loop antenna (5) in a horizontal plane is arranged at a set distance above and/or below the circular array (1-4) on the mast (6).

8. An antenna array according to claim 7, **characterized in that** at least one additional loop antenna (5) has the same design as the loop antennas of the circular array (1-4) and is preferably arranged at a set distance directly above and/or below one of (1) the loop antennas of the circular array (1-4) on the mast (6).

9. An antenna array according to one of claims 7 or 8, **characterized in that** the distance and/or alignment of at least one additional loop antenna (5) from the circular array (1-4) and/or the mast (6) is variable.

10. An antenna array according to one of the prior claims, **characterized by** its use in a direction-finding system on a floating body, especially a ship.

## Revendications

1. Dispositif d'antenne pour la goniométrie d'ondes d'espace composé d'un groupe circulaire installé sur le mât et comprenant plusieurs antennes cadres polarisées,
**caractérisé en ce que**
les antennes cadres (1-4) sont installées couchées dans un plan horizontal.

2. Dispositif d'antenne selon la revendication 1,
**caractérisé en ce que**
le groupe circulaire se compose de quatre antennes cadres (1-4).

3. Dispositif d'antenne selon la revendication 2,
**caractérisé en ce que**
les quatre antennes cadres (1-4) sont prévues dans les coins d'un carré situé dans le plan horizontal.

4. Dispositif d'antenne selon l'une quelconque des revendications précédentes,
**caractérisé en ce que**
les antennes cadres (1-4) ont une forme circulaire ou rectangulaire ou de losange ou de carré.

5. Dispositif d'antenne selon l'une quelconque des revendications 1 à 4,
**caractérisé en ce que**
le groupe circulaire (1-4) fait partie d'un dispositif de goniométrie fonctionnant selon le procédé Adcock-Watson-Watt.

6. Dispositif d'antenne selon l'une quelconque des revendications 1 à 4,
**caractérisé en ce que**
le groupe circulaire (1-4) fait partie d'un dispositif de goniométrie fonctionnant selon le procédé de goniométrie par interférométrie.

7. Dispositif d'antenne selon l'une quelconque des revendications précédentes,
**caractérisé en ce qu'**
au moins une antenne supplémentaire (5), située dans un plan horizontal, est prévue à une distance prédéterminée au-dessus et/ou en dessous du groupe circulaire (1-4) sur le mât (6).

8. Dispositif d'antenne selon la revendication 7,
**caractérisé en ce que**
l'antenne cadre supplémentaire (5) au moins unique est de même construction que les antennes cadres du groupe circulaire (1-4) et de préférence elle est installée à une distance prédéterminée directement au-dessus et/ou en dessous d'une antenne cadre du groupe circulaire (1-4) sur le mât (6).

9. Dispositif d'antenne selon l'une quelconque des revendications 7 ou 8,
**caractérisé en ce que**
1' antenne cadre (5) supplémentaire au moins unique est à une distance réglable du groupe circulaire (1-4) et/ou du mât (6) et/ou dans son alignement.

10. Dispositif d'antenne selon l'une quelconque des revendications précédentes,
**caractérisé par**
son application à un dispositif de goniométrie installé sur un corps flottant, notamment un navire.
